# EUROPEAN PATENT SPECIFICATION

(11) **EP 3 442 749 B1**
(45) Date of publication and mention of the grant of the patent: **27.10.2021**
(21) Application number: 16829050.0
(22) Date of filing: 29.12.2016
(51) Int. Cl.: B24D 3/34, C09D 125/08, B24D 11/00, C08K 3/34, C08K 5/098, C09D 125/14

(54) **ABRASIVE ARTICLE AND METHOD OF MAKING AN ABRASIVE ARTICLE**
SCHLEIFARTIKEL UND VERFAHREN ZUR HERSTELLUNG EINES SCHLEIFARTIKELS
ARTICLE ABRASIF ET PROCÉDÉ DE RÉALISATION D'UN ARTICLE ABRASIF

(30) Priority: 13.04.2016 US 201662321985 P
(43) Date of publication of application: 20.02.2019
(73) Proprietor: 3M Innovative Properties Company, St. Paul, MN 55133-3427 (US)
(72) Inventor: JACOB, Ceni, London Ontario N5V 3R6 (CA); GORGAN, Adriana C., London Ontario N5V 3R6 (CA); JOHNSON, Jennifer L., London Ontario N5V 3R6 (CA); YANG, Yugeun P., Saint Paul Minnesota 55133-3427 (US)
(74) Representative: Vossius & Partner Patentanwälte Rechtsanwälte mbB
(86) International application number: PCT/US2016/069266
(87) International publication number: WO 2017/180210

(56) References cited:
- EP-A2- 0 740 980
- JP-A- 2003 103 929

## Description

### Field of the Invention

Provided are abrasive articles, along with related compositions and methods of use. The provided abrasive articles can be useful in, for example, abrading soft materials such as painted automotive surfaces.

### Background

Abrasive articles are widely used by consumers, manufacturers, and service providers to perform sanding and finishing operations on almost any given workpiece. Potential workpieces are diverse and can have surfaces made of plastic, wood, metal, or even ceramic materials.

These articles are generally made by affixing abrasive particles onto some sort of backing, which can be either rigid or flexible. In some cases, the abrasive particles are uniformly mixed with a polymeric binder to form a slurry, which is then coated onto the backing and cured to provide the final product. Alternatively, the abrasive particles can be directly adhered to the surface of the backing by partially embedding them in curable resins called "make" and "size" coats. An advantage of the latter approach is that the abrasive particles can be provided in a preferred orientation on the working surface, enabling material to be removed efficiently.

Printed flexible abrasives are a particular kind of abrasive product where a graphic image is permanently imparted onto the rough side of the abrasive sheet. Such articles offer unique benefits to both manufacturers and consumers. The ability to place graphics on an abrasive can enhance its appearance and provide branding or promotional information. The inclusion of printed information can also be effective in communicating technical details to the end user, such as its grit size, or safety information. Printing ornamental and functional images directly on the abrasive is generally preferred over placing them on product packaging because abrasive products frequently become separated from their packaging.

Disposing a printed image onto an abrasive article can be technically challenging, because the components of an abrasive article are often opaque or immiscible with each other; in combination, these components tend to show limited translucency. Methods for making abrasive articles that show graphic images visible from the abrasive-side of the article are described, for example, in provisional U.S. Patent Application Serial No. 62/076,874 (Graham et al.).

EP-A-740 980 reveals an abrasive article comprising a plurality of layers. It has a backing, an abrasive layer, and a supersize coat comprising calcium stearate and a styrene acrylic polymer. This citation forms the basis of the preamble of Claim 1.

### Summary

When abrading soft materials, performance tends to diminish as debris (also known as swarf) from the sanding fills in the spaces between the abrasive grains. Swarf loading can prevent the abrasive from effectively contacting the work surface and degrade cut performance. This negative effect can be alleviated by applying a "supersize" coat of a soapy composition on top of the abrasive particles. The supersize coat generally includes an amphiphilic salt (or soap) compound, a polymeric binder, and optionally other ingredients such as a defoamer and biocide.

Conventional supersize formulations have been limited by process limitations that prevent use of high temperatures to melt the binder and provide a translucent coating. For example, use of temperatures above the melting point of the binder can significantly dry out the backing, causing brittleness and cracking and also complicate web handling of the abrasive product. While it is possible to prepare a viable coating at lower temperatures by adding significant amounts of a surfactant, this additional component adds costs and incurs associated environmental costs.

A solution to this dilemma is provided by the novel abrasive articles, compositions, and methods herein. The provided abrasive articles are borne from a supersize composition that can be dried to a translucent film at temperatures well below the melting temperature of the binder without need for a surfactant. These abrasives mitigate swarf accumulation in the areas around the abrasive particles thereby enhancing cut performance, while achieving a high degree of optical clarity. Compared with conventional abrasive articles that do not use a surfactant, these articles can provide improved clarity for a given cut performance and expected lifetime of the abrasive product.

In a first aspect, an abrasive article according to Claim 1 is provided.

In a second aspect, a method of making an abrasive article according to Claim 14 is provided.

### Brief Description of the Drawings

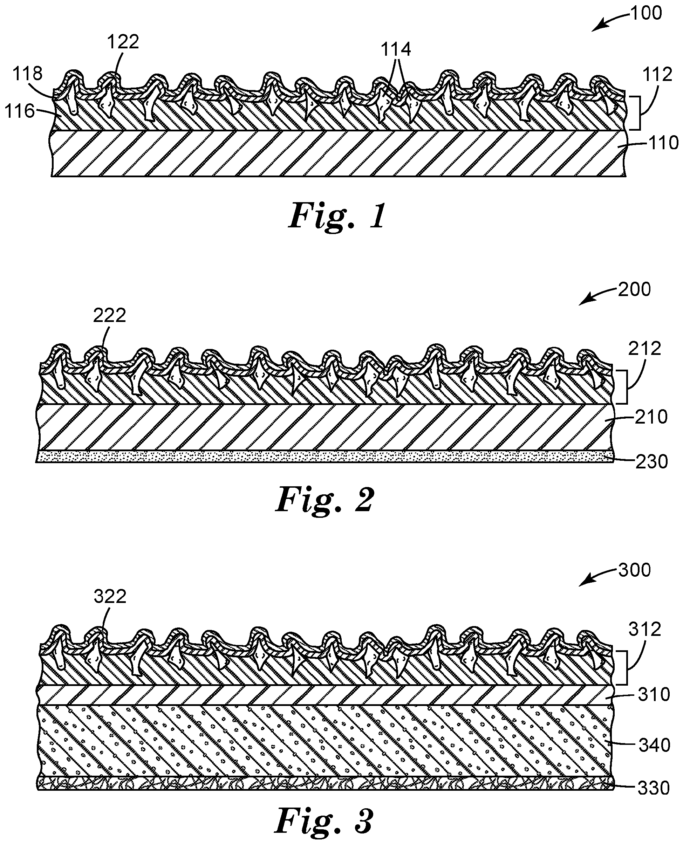

FIGS. 1-5 are side cross-sectional views of abrasive articles according to various exemplary embodiments.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. Figures may not be drawn to scale.

### DEFINITIONS

As used herein:
"particle aspect ratio" refers to the ratio between the longest and the shortest dimension of the particle;
"particle diameter" refers to the longest dimension of the particle;
"surfactant" refers to a water-soluble organic molecule containing both a hydrophobic group and a hydrophilic group used to lower the surface tension of water.

### Detailed Description

Described in more detail herein are abrasive articles, supersize compositions, and methods of making and using the same.

The words "preferred" and "preferably" refer to embodiments described herein that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

Relative terms such as left, right, forward, rearward, top, bottom, side, upper, lower, horizontal, vertical, and the like may be used herein and, if so, are from the perspective observed in the particular figure. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Furthermore, the particular features, structures, materials, or characteristics may be combined in any suitable manner in one or more embodiments.

Further details on abrasive article constructions, backings, abrasive layers, supersize coats, and attachments layers are described in respective subsections below.

### ABRASIVE ARTICLE CONSTRUCTION

An exemplary abrasive article, shown in FIG. 1, is illustrated according to one embodiment and herein referred to by the numeral 100. As shown, the abrasive article 100 includes a plurality of layers. From the bottom to the top, these layers include: a backing 110, an abrasive layer 112, and a supersize coat 122. The abrasive layer 112 is itself multilayered and includes a make coat 116, abrasive particles 114, and a size coat 118.

FIG. 2, like FIG. 1, shows an abrasive article 200 having a backing 210, abrasive layer 212, and supersize coat 222. The abrasive article 200 additionally has a continuous attachment layer 230 that extends across and directly contacts a major surface of the backing 210 facing away from the abrasive layer 212. In the exemplary embodiment depicted here, the attachment layer 230 is a removable pressure-sensitive adhesive.

FIG. 3, like FIGS. 1 and 2, shows an abrasive article 300 having a backing 310, abrasive layer 312, and supersize coat 322. Like the abrasive article 200 in FIG. 2, the abrasive article 300 has an attachment layer 330. In this case, the attachment layer 330 is one part of a hook-and-loop attachment mechanism. A polymeric compressible foam 340 is interposed between the backing 310 and the attachment layer 330. Optionally but not shown, one or more additional layers could be disposed between any of the above layers to help adhere layers to each other, provide a printed image, act as a barrier layer, or serve any other purpose known in the art. By providing compressibility to the abrasive article 300, the compressible foam 340 can enable a more uniform contact with the workpiece to the abraded, and particularly so where the workpiece has non-planar contours. As a further option, the backing 310 and compressible foam 340 could be consolidated into a single layer that serves both functions.

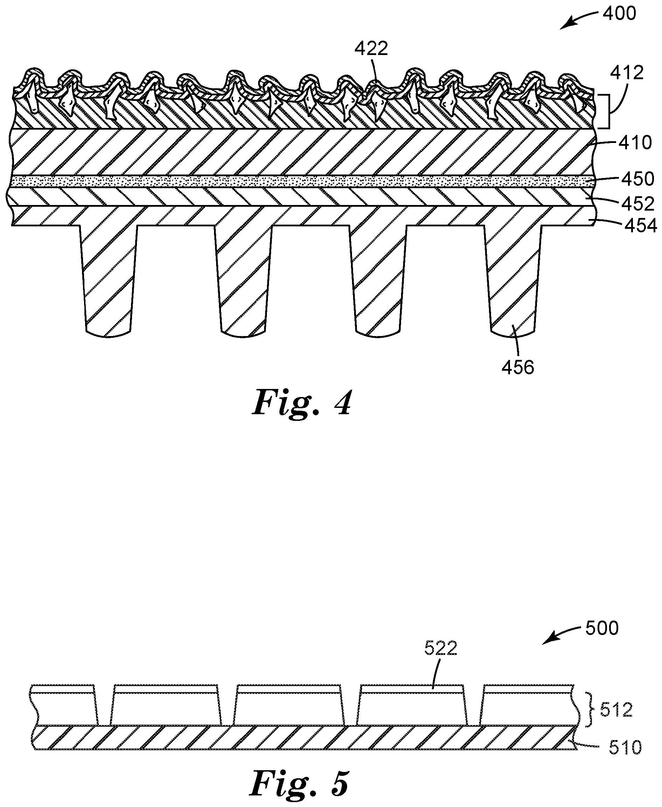

FIG. 4, like FIGS. 1-3, shows an abrasive article 400 having a backing 410, abrasive layer 412, and supersize coat 422. The abrasive article 400 further includes an adhesive layer 450 bonding the backing 410 to an underlying reinforcing layer 452, which is in turn adhered to a gripping layer 454. The gripping layer 454 includes integral protrusions 456 that extend outwardly from the backing and assist the operator in handling the abrasive article 400. To provide improved handling of the abrasive article 400, it is beneficial for the gripping layer 454 to be made from an elastomeric polymer, and preferably elastomeric polymers having a Shore A hardness ranging from 5 to 90. Further information concerning useful materials and geometries for the gripping layer 454 are described in U.S. Patent No. 6,372,323 (Kobe et al.) and co-pending International Patent Application No. PCT/US15/61762 (Graham et al.).

FIG. 5, like FIGS. 1-4, shows an abrasive article 500 having a backing 510, abrasive layer 512, and supersize coat 522. The abrasive article 500 differs from the others in that the abrasive layer 512 is comprised of discontinuous, or discrete, islands of a hardened abrasive composite. Such a composite can be made by uniformly mixing abrasive particles with a binder to form a viscous slurry. This slurry can then be cast and appropriately hardened (for example, using a thermal or radiation curing process) onto a backing 510 to obtain the abrasive layer 512, as shown in FIG. 5.

Advantageously, the abrasive slurry can be cast between the underlying film and a mold having tiny geometric cavities prior to hardening. After hardening, the resulting abrasive coating is molded into a plurality of tiny, precisely shaped abrasive composite structures affixed to the underlying film. The hardening of the binder can be achieved by a curing reaction triggered by heat or exposure to actinic radiation. Examples of actinic radiation include, for example, an electron beam, ultraviolet light, or visible light.

The layer configurations described above are not intended to be exhaustive, and it is to be understood that one or ordinary skill may add or remove layers with respect to any of the embodiments depicted in FIGS. 1-5 for reasons already known in the art.

### BACKING

The aforementioned abrasive articles generally include a backing, such as any of backings 110, 210, 310 410, 510 above. The backing may be constructed from any of a number of materials known in the art for making coated abrasive articles. Although not necessarily so limited, the backing can have a thickness of at least 0.02 millimeters, at least 0.03 millimeters, 0.05 millimeters, 0.07 millimeters, or 0.1 millimeters. The backing could have a thickness of up to 5 millimeters, up to 4 millimeters, up to 2.5 millimeters, up to 1.5 millimeters, or up to 0.4 millimeters.

The backing is preferably flexible and may be either solid (as shown in FIG. 1) or porous. Flexible backing materials include polymeric film (including primed films) such as polyolefin film (e.g., polypropylene including biaxially oriented polypropylene, polyester film, polyamide film, cellulose ester film), polyurethane rubber, metal foil, mesh, foam (e.g., natural sponge material or polyurethane foam), cloth (e.g., cloth made from fibers or yarns comprising polyester, nylon, silk, cotton, and/or rayon), scrim, paper, coated paper, vulcanized paper, vulcanized fiber, nonwoven materials, combinations thereof, and treated versions thereof. The backing may also be a laminate of two materials (e.g., paper/film, cloth/paper, film/cloth). Cloth backings may be woven or stitch bonded. In some embodiments, the backing is a thin and conformable polymeric film capable of expanding and contracting in transverse (i.e. in-plane) directions during use.

Preferably, a strip of such a backing material that is 5.1 centimeters (2 inches) wide, 30.5 centimeters (12 inches) long, and 0.102 millimeters (4 mils) thick and subjected to a 22.2 Newton (5 Pounds-Force) dead load longitudinally stretches at least 0.1%, at least 0.5%, at least 1.0%, at least 1.5%, at least 2.0%, at least 2.5%, at least 3.0%, or at least 5.0%, relative to the original length of the strip. Preferably, the backing strip longitudinally stretches up to 20%, up to 18%, up to 16%, up to 14%, up to 13%, up to 12%, up to 11%, or up to 10%, relative to the original length of the strip. The stretching of the backing material can be elastomeric (with complete spring back), inelastic (with zero spring back), or some mixture of both. This property helps promote contact between the abrasive particles 114 and the underlying workpiece, and can be especially beneficial when the workpiece includes raised and/or recessed areas.

Useful backing materials can be highly conformable. Highly conformable polymers that may be used in the backing include certain polyolefin copolymers, polyurethanes, and polyvinyl chloride. One particularly preferred polyolefin copolymer is an ethylene-acrylic acid resin (available under the trade designation "PRIMACOR 3440" from Dow Chemical Company, Midland, MI). Optionally, ethylene-acrylic acid resin is one layer of a bilayer film in which the other layer is a polyethylene terephthalate ("PET") carrier film. In this embodiment, the PET film is not part of the backing itself and is stripped off prior to using the abrasive article 100. While it is possible to strip the PET from the ethylene-acrylic acid resin surface, the ethylene-acrylic acid resin and the PET can also be bonded such that these two layers stay together during use of the abrasive article.

In some embodiments, the backing has a modulus of at least 10, at least 12, or at least 15 kilogram-force per square centimeter (kgf/cm²). In some embodiments, the backing has a modulus of up to 200, up to 100, or up to 30 kgf/cm². The backing can have a tensile strength at 100% elongation (double its original length) of at least 200 kgf/cm², at least 300 kgf/cm², or at least 350 kgf/cm². The tensile strength of the backing can be up to 900 kgf/cm², up to 700 kgf/cm², or up to 550 kgf/cm². Backings with these properties can provide various options and advantages, some of which are described in U.S. Patent No. 6,183,677 (Usui et al.).

Optionally, the backing may have at least one of a saturant, presize layer, or backsize layer. These materials can be used to seal the backing or to protect yarn or fibers present in the backing. If the backing is a cloth material, at least one of these materials is typically used. Advantageously, the addition of the presize layer or backsize layer can provide a smoother surface on either the front and/or the back side of the backing. Other optional layers known in the art may also be used, as described in U.S. Patent No. 5,700,302 (Stoetzel et al.).

### ABRASIVE LAYER

The abrasive layer is a layer containing a hard mineral that serves to abrade the workpiece. In FIGS. 1-4, the abrasive layer is a coated abrasive film that includes a plurality of abrasive particles 114 secured to a plurality of hardened resin layers. The abrasive particles 114 are adhesively coupled to the backing by implementing a sequence of coating operations involving a hardenable make coat 116 and size coat 118. It is common for the make coat 116 to include a curable polymeric resin in which the abrasive particles 114 are at least partially embedded and the size coat 118 to include the same or optionally a different curable polymeric resin disposed on the make coat 116.

In the configuration shown in FIGS. 1-4, the abrasive particles 114 are partially or fully embedded in respective make and size coats 116, 118 in close proximity to the surface of the abrasive article 100. This allows the abrasive particles 114 to easily come into frictional contact with the workpiece when the abrasive article 100 is rubbed against the workpiece.

The abrasive particles 114 are not limited and may be composed of any of a variety of hard minerals known in the art. Examples of suitable abrasive particles include, for example, fused aluminum oxide, heat treated aluminum oxide, white fused aluminum oxide, black silicon carbide, green silicon carbide, titanium diboride, boron carbide, silicon nitride, tungsten carbide, titanium carbide, diamond, cubic boron nitride, hexagonal boron nitride, garnet, fused alumina zirconia, alumina-based sol gel derived abrasive particles, silica, iron oxide, chromia, ceria, zirconia, titania, tin oxide, gamma alumina, and mixtures thereof. The alumina abrasive particles may contain a metal oxide modifier. The diamond and cubic boron nitride abrasive particles may be monocrystalline or polycrystalline.

There is almost always some range or distribution of abrasive particle sizes. Such a distribution can be characterized by its median particle size. For instance, the median particle size of the abrasive particles may be at least 0.001 micrometers, at least 0.005 micrometers, at least 0.01 micrometers, at least 0.015 micrometers, or at least 0.02 micrometers. In some instances, the median particle size of the abrasive particles may be up to 300 micrometers, up to 275 micrometers, up to 250 micrometers, up to 150 micrometers, or up to 100 micrometers.

FIG. 5 shows an alternative kind of abrasive layer. In this embodiment, the abrasive layer 512 is comprised of discrete islands of an abrasive composite. Such a composite can be made by uniformly mixing abrasive particles with a binder to form a viscous slurry. This slurry can then be cast and appropriately hardened (for example, using a thermal or radiation curing process) onto a backing 510 to afford the abrasive layer 512, as shown in the figure. The cast slurry can be cast onto the backing in a continuous layer or a patterned, discontinuous layer, as shown in FIG. 5.

Optionally, the abrasive slurry is molded onto a suitable backing to form a structured abrasive. Structured abrasives can be made by mixing abrasive particles and a hardenable precursor resin in a suitable binder resin (or binder precursor) to form a slurry, casting the slurry between the underlying film and a mold having tiny geometric cavities, and then hardening the binder. After hardening, the resulting abrasive coating is molded into a plurality of tiny, precisely shaped abrasive composite structures affixed to the underlying film. The hardening of the binder can be achieved by a curing reaction triggered by heat or exposure to actinic radiation. Examples of actinic radiation include, for example, an electron beam, ultraviolet light, or visible light.

### SUPERSIZE COAT

In general, the supersize coat is the outermost coating of the abrasive article and directly contacts the workpiece during an abrading operation. The supersize coat has a composition that acts to reduce the loading of swarf around the abrasive particles and improve the overall cut performance of the abrasive article.

A first major component of the provided supersize coats is a metal salt of a long-chain fatty acid. In preferred embodiments, the metal salt of a long-chain fatty acid is a stearate (i.e., a salt of stearic acid). The conjugate base of stearic acid is C₁₇H₃₅COO⁻, also known as the stearate anion. Useful stearates include calcium stearate, zinc stearate, and combinations thereof.

Of the metal salts above, calcium stearate is especially preferred. Calcium stearate is a white waxy powder that, unlike other stearates, is insoluble in water and thus not a surfactant. When used in combination with certain polymeric binders (as will be discussed further below), calcium stearate can be used to prepare supersize compositions that either contain substantially reduced amounts of surfactants or are essentially free of surfactants. Surfactants have generally been used to improve the translucency of the supersize coat that are dried at lower temperatures. The provided supersize compositions display a high degree of clarity without need for added surfactants.

In some embodiments, the supersize composition displays a transmittance of at least 5 percent, at least 20 percent, at least 40 percent, at least 50 percent, or at least 60 percent, according to the Transmittance Test (as described in the forthcoming Examples).

The metal salt of a long-chain fatty acid can be present in an amount of at least 10 percent, at least 50 percent, at least 70 percent, at least 80 percent, or at least 90 percent by weight based on the normalized weight of the supersize coat (i.e., the average weight for a unit surface area of the abrasive article). The metal salt of a long-chain fatty acid can be present in an amount of up to 100 percent, up to 99 percent, up to 98 percent, up to 97 percent, up to 95 percent, up to 90 percent, up to 80 percent, or up to 60 percent by weight based on the normalized weight of the supersize coat.

A second major component of the supersize composition is the polymeric binder, which enables the composition to form a smooth and continuous film over the abrasive layer. In a preferred embodiment, the polymeric binder is an ammonium salt of a modified styrene-acrylic polymer. The ammonium salt of a styrene-acrylic polymer can have, for example, a weight average molecular weight (M_{w}) of at least 100,000 g/mol, at least 150,000 g/mol, at least 200,000 g/mol, or at least 250,000 g/mol.

The minimum film-forming temperature, also referred to as MFFT, is the lowest temperature at which a polymer self-coalesces in a semi-dry state to form a continuous polymer film. In the context of the present disclosure, this polymer film can then function as a binder for the remaining solids present in the supersize coat. Preferably, the ammonium salt of a styrene-acrylic polymer has an MFFT that is up to 90 degrees Celsius, up to 80 degrees Celsius, up to 70 degrees Celsius, up to 65 degrees Celsius, or up to 60 degrees Celsius.

It is preferred that the binder be dried at relatively low temperatures (e.g., at 70 degrees Celsius or less). It is preferred that drying temperatures are below the melting temperature of metal salt component. As mentioned previously, use of excessively high temperatures to dry the supersize coat is undesirable because it can induce brittleness and cracking in the backing, complicate web handling, and increase manufacturing costs. By virtue of its low MFFT, a binder comprised of an ammonium salt of a styrene-acrylic polymer allows the supersize coat to achieve better film formation at lower binder levels and at lower temperatures without need for added surfactants.

The polymeric binder can be present in an amount of at least 0.1 percent, at least 1 percent, or at least 3 percent by weight, based on the normalized weight of the supersize coat. The polymeric binder can be present in an amount of up to 20 percent, up to 12 percent, up to 10 percent, or up to 8 percent by weight, based on the normalized weight of the supersize coat.

The supersize coats of the present disclosure optionally contain clay particles dispersed in the supersize coat. The clay particles are preferably uniformly mixed with the metal salt of a long chain fatty acid, polymeric binder, and other components of the supersize composition. The clay bestows unique advantageous properties to the abrasive article, such as improved optical clarity and improved cut performance. It was also discovered that the inclusion of clay particles can enable cut performance to be sustained for longer periods of time relative to supersize coats in which the clay additive is absent.

In some embodiments, the clay particles can reduce the CIELAB ΔE* color difference relative to an uncoated abrasive layer by at least 5 percent, at least 7 percent, at least 10 percent, at least 15 percent, or at least 25 percent, compared with the CIELAB ΔE* color difference obtained when the clay particles are absent.

The clay particles can be present in an amount of at least 0.01 percent, at least 0.05 percent, at least 0.1 percent, at least 0.15 percent, or at least 0.2 percent by weight based on the normalized weight of the supersize coat. Further, the clay particles can be present in an amount of up to 99 percent, up to 50 percent, up to 25 percent, up to 10 percent, or up to 5 percent by weight based on the normalized weight of the supersize coat.

Useful clay particles can have particle sizes that vary over a very wide range. For example, the median particle size can be at least 0.01 micrometers, at least 0.02 micrometers, or at least 0.1 micrometers. The individual clay particles can have a median particle size of up to 100 micrometers, up to 10 micrometers, or up to 1 micrometer.

The unique physical properties of many useful clay materials relate to their layered platelet-like structures. Such particles can have a median aspect ratio of at least 10, at least 15, at least 20, at least 50, at least 75, or at least 100. Further, the median aspect ratio can be up to 10,000, up to 8000, up to 6000, up to 4000, up to 2000, or up to 1000.

The clay particles may include particles of any known clay material. Such clay materials include those in the geological classes of the smectites, kaolins, illites, chlorites, serpentines, attapulgites, palygorskites, vermiculites, glauconites, sepiolites, and mixed layer clays. Smectites in particular include montmorillonite (e.g., a sodium montmorillonite or calcium montmorillonite), bentonite, pyrophyllite, hectorite, saponite, sauconite, nontronite, talc, beidellite, and volchonskoite. Specific kaolins include kaolinite, dickite, nacrite, antigorite, anauxite, halloysite, indellite and chrysotile. Illites include bravaisite, muscovite, paragonite, phlogopite and biotite. Chlorites can include, for example, corrensite, penninite, donbassite, sudoite, pennine and clinochlore. Mixed layer clays can include allevardite and vermiculitebiotite. Variants and isomorphic substitutions of these layered clays may also be used.

Layered clay materials may be either naturally occurring or synthetic. Exemplary clay materials include natural and synthetic hectorites, montmorillonites and bentonites. Examples of montmorillonite and bentonite clays include those clays available from Altana AG, Wesel, Germany, under the trade designations "CLOISITE", "MINERAL COLLOID", "NANOFIL", "GELWHITE", and "OPTIGEL" (e.g., "MINERAL COLLOID BP", "CLOISITE NA+", "NANOFIL 116", and "OPTIGEL CK"), as well as those clays available from R.T. Vanderbilt, Murray, KY, under the trade designation "VEEGUM" (e.g., "VEEGUM PRO" and "VEEGUM F"), and clay available from Nanocor, Inc., Hoffman Estates, IL, under the trade designation "NANOMER." Examples of hectorite clays include the commercially available clays available from Altana AG under the trade designation "LAPONITE".

Other clay particles may be composed of vermiculite clays, such as those commercially available from Specialty Vermiculite Corp., Enoree, SC, under the trade designations "VERMICULITE", "MICROLITE", "VERXITE", and "ZONOLITE."

Natural clay minerals often exist as layered silicate minerals. A layered silicate mineral has SiO₄ tetrahedral sheets arranged into a two-dimensional network structure. A 2:1 type layered silicate mineral has a laminated structure of several to several tens of silicate sheets having a three layered structure in which a magnesium octahedral sheet or an aluminum octahedral sheet is interposed between a pair of silica tetrahedral sheets.

Particular silicates include hydrous silicate, layered hydrous aluminum silicate, fluorosilicate, mica-montmorillonite, hydrotalcite, lithium magnesium silicate and lithium magnesium fluorosilicate. Substituted variants of lithium magnesium silicate are also possible, where the hydroxyl group is partially substituted with fluorine, for example. Lithium and magnesium may also be partially substituted by aluminum. More broadly, the lithium magnesium silicate may be isomorphically substituted by any member selected from the group consisting of magnesium, aluminum, lithium, iron, chromium, zinc and mixtures thereof.

Synthetic hectorite is commercially available from Altana AG under the trade designation "LAPONITE." There are many grades or variants and isomorphous substitutions of LAPONITE, including those synthetic hectorites available under the trade designations "LAPONITE B", "LAPONITE S", "LAPONITE XLS", "LAPONITE RD", "LAPONITE XLG", "LAPONITE S482", and "LAPONITE RDS."

The clay materials can provide particular frictional and static charge accumulation properties that affect both swarf loading and abrasives performance. In regards to friction, the clay particles in the supersize coat can alleviate localized frictional heating known to increase swarf coalescence during an abrading operation. In the latter case, the clay particles can disrupt the electrostatic attraction that normally occurs between the abrasive article 100 and swarf particles.

As an optional additive, abrasive performance may be further enhanced by nanoparticles (i.e., nanoscale particles) interdispersed with the clay particles of the supersize coat. Useful nanoparticles include, for example, nanoparticles of metal oxides, such as zirconia, titania, silica, ceria, alumina, iron oxide, vanadia, zinc oxide, antimony oxide, tin oxide, and alumina-silica. The nanoparticles can have a median particle size of at least 1 nanometer, at least 1.5 nanometers, or at least 2 nanometers. The median particle size can be up to 200 nanometers, up to 150 nanometers, up to 100 nanometers, up to 50 nanometers, or up to 30 nanometers.

The nanoparticles can have any of a number of different particle size distributions. In some embodiments, the nanoparticles have a D₉₀/D₅₀ particle size ratio of at least 1.1, at least 1.2, at least 1.3, or at least 1.4. In some embodiments, the nanoparticles have a D₉₀/D₅₀ particle size ratio of up to 5, up to 4, up to 3, up to 2, or up to 1.8.

In some embodiments, the nanoparticles are sintered to form nanoparticle agglomerates. For example, the nanoparticles may be comprised of fumed silica in which primary silica particles are sintered to provide silica particles aggregated into chains.

Other optional components of the supersize composition include curing agents, surfactants, antifoaming agents, biocides, and other particulate additives known in the art for use in supersize compositions.

The supersize coat can be formed, in some embodiments, by providing a supersize composition in which the components are dissolved or otherwise dispersed in a common solvent. Preferably, the solvent is water. After being suitably mixed, the supersize dispersion can be coated onto the underlying layers of the abrasive article and cured (i.e., hardened) either thermally or by exposure to actinic radiation at suitable wavelengths to activate the curing agent.

Any known method can be used to coat the dispersion above onto the supersize coat. In exemplary embodiments, the dispersion is applied by spray coating at a constant pressure to achieve a pre-determined coating weight. Alternatively, a knife coating method where the coating thickness is controlled by the gap height of the knife coater could be used.

### ATTACHMENT LAYERS

An attachment layer can be affixed to the backing to help secure the abrasive article to a sanding block, power tool, or even the hand of an operator. In FIG. 2, the attachment layer 230 is comprised of a pressure-sensitive adhesive. The attachment layer can also use a mechanical retention mechanism. In FIG. 3, the attachment layer 330 is comprised of a fibrous material, such as a scrim or non-woven material forming half of a hook and loop attachment system. The other half can be provided, for example, on a sanding block or the movable chuck of a power tool. Such attachment systems are advantageous because they allow the abrasive article to be easily replaced when worn out.

Additional options and advantages of these abrasive articles are described in U.S. Patent Nos. 4,988,554 (Peterson, et al.), 6,682,574 (Carter, et al.), 6,773,474 (Koehnle et al.), and 7,329,175 (Woo et al.).

### EXAMPLES

Objects and advantages of this disclosure are further illustrated by the following non-limiting examples, but the particular materials and amounts thereof recited in these examples, as well as other conditions and details, should not be construed to unduly limit this disclosure.

The following abbreviations are used to describe the examples:
- °C:: degrees Centigrade
- cm:: centimeter
- cm/s:: centimeters per second
- ctg. wt.:: coating weight
- g/m²:: grams per square meter
- in/s:: inches per second
- Kg:: kilogram
- lb:: pound
- MFFT:: minimum film forming temperature
- min:: minute
- mL:: milliliter
- µm:: micrometer
- nm:: nanometer
- rpm:: revolutions per minute
- T_{g}:: glass transition temperature
- wt.%:: weight percent

Unless stated otherwise, all reagents were obtained or are available from chemical vendors such as Sigma-Aldrich Company, St. Louis, Missouri, or may be synthesized by known methods. Unless otherwise reported, all ratios are by dry weight.

Abbreviations for materials and reagents used in the examples are as follows:
- DPnP:: Dipropylene glycol n-butyl ether, obtained under the trade designation "DOWANOL DPnP" from Dow Chemical Company, Midland, Michigan.
- HL27:: An antifoaming agent, obtained under the trade designation "HL27" from Harcross, Inc., St. Paul, Minnesota.
- J-89:: A 48.0 wt.% aqueous, non-film forming, styrene acrylic emulsion, having an MFFT of greater than 80°C and a T_{g} of 98°C, obtained under the trade designation "JONCRYL J89" from BASF Company, Ludwigshafen, Germany.
- J-1655:: A 48.0 wt.% aqueous, non-film forming, sodium neutralized, acrylic emulsion, having an MFFT of greater than 80°C and a T_{g} of 108°C, obtained under the trade designation "JONCRYL 1655" from BASF Company.
- J-1908:: A 48.0 wt.% aqueous, non-film forming, styrene acrylic emulsion, having an MFFT of greater than 70°C and a T_{g} of 98°C, obtained under the trade designation "JONCRYL 1908" from BASF Company.
- J-7051:: A 44.5 wt.% aqueous, non-film forming, styrene acrylic emulsion, having an MFFT of 56°C and a T_{g} of 98°C, obtained under the trade designation "JONCRYL LMV 7051" from BASF Company.
- KATH:: A biocide, obtained under the trade designation "KATHON CG ICP" from Dow Chemical Company.
- LS-233:: A 52 wt.% aqueous calcium stearate dispersion, obtained under the trade designation "LOXANOL MI S233" from Geo Specialty Chemicals, Inc., Ambler, Pennsylvania.
- MMC:: A natural montmorillonite clay, obtained under the trade designation "CLOISITE-Na+" from BYK-Chemie GmbH, Wesel, Germany.

### Comparative A

A stearate/styrene acrylic supersize composition was prepared as follows. 81.47 grams calcium stearate dispersion LS233, 13.81 grams styrene acrylic dispersion J-89, 3.86 grams surfactant DPnP, 0.68 grams anti-foaming agent HL27 and 0.16 grams KATH were homogeneously dispersed by means of a propeller blade mixer at 500 rpm for 5 minutes at 21°C. Approximately 1 mL of this supersize composition was evenly coated onto the corona treated surface of a 15 by 20 cm by 2 mil (50.8 µm) sheet of clear polyester film using a Meyer rod bar coater and dried for 30 seconds at 70°C in an air-circulating oven. % Transmittance of the dried coating was then measured at 500 nm using a spectrophotometer.

### Examples 1-2

Stearate/styrene acrylic supersize compositions were prepared and coated onto the clear polyester film according to the procedure generally described in Comparative A, wherein the styrene acrylic emulsion J-89 was replaced with J-7051 according to the quantities listed in Table 1.

**TABLE 1**

| Sample | Composition (grams) | | | | | | Transmittance (%) |
|---|---|---|---|---|---|---|---|
| | LS-233 | J-89 | J-7051 | DPnP | HL27 | KATH | |
| Comparative A | 81.47 | 13.81 | 0 | 3.86 | 0.68 | 0.18 | 64 |
| Example 1 | 81.47 | 0 | 13.81 | 3.86 | 0.68 | 0.18 | 65 |
| Example 2 | 89.73 | 0 | 9.33 | 0 | 0.75 | 0.19 | 63 |

### Comparatives B-H and Examples 3-6

Three batches of the LS-233 stearate, having differing levels of translucency, were coated onto clear polyester sheets, dried and the % transmittance measured. Stearate/styrene acrylic supersize compositions as listed in Table 2 were then prepared and coated onto clear polyester film according to the procedure generally described in Comparative A. With respect to Comparative D, the nanoparticle clay was pre-dispersed before homogeneously blending into the stearate suspension by means of the high speed propeller mixer. % transmittance values are listed in Table 2.

**TABLE 2**

| Sample | Composition (grams) | | | | | | | Transmittance (%) | |
|---|---|---|---|---|---|---|---|---|---|
| | LS-233 | J-89 | J-1655 | J-7051 | MMC | DPnP | HL27 | LS-233 Batch | Coated Sample |
| Comparative B | 85.7 | 12.0 | 0 | 0 | 0 | 1.6 | 0.70 | 6 | 68 |
| Comparative C | 90.4 | 8.0 | 0 | 0 | 0 | 0.82 | 0.73 | 6 | 36 |
| Example 3 | 90.5 | 0 | 0 | 8.0 | 0 | 0.80 | 0.70 | 6 | 63 |
| Example 4 | 91.2 | 0 | 0 | 8.0 | 0 | 0 | 0.73 | 6 | 60 |
| Comparative D | 89.8 | 0 | 8.0 | 0 | 1.5 | 0 | 0.70 | 6 | 57 |
| Comparative E | 91.1 | 8.0 | 0 | 0 | 0 | 0.20 | 0.70 | 32 | 63 |
| Comparative F | 91.2 | 8.0 | 0 | 0 | 0 | 0 | 0.73 | 32 | 53 |
| Example 5 | 91.2 | 0 | 0 | 8.0 | 0 | 0 | 0.73 | 32 | 63 |
| Comparative G | 91.2 | 8.0 | 0 | 0 | 0 | 0 | 0.73 | 9 | 37 |
| Comparative H | 90.4 | 8.0 | 0 | 0 | 0 | 0.82 | 0.73 | 9 | 57 |
| Example 6 | 91.2 | 0 | 0 | 8.0 | 0 | 0 | 0.73 | 9 | 57 |

### Comparatives I-K and Example 7

Stearate/styrene acrylic supersize compositions as listed in Table 3 were prepared and coated onto clear polyester film according to the procedure generally described in Comparative A, and the % transmittance and T_{g} measured.

**TABLE 3**

| Sample | Composition (grams) | | | | | | Transmittance (%) |
|---|---|---|---|---|---|---|---|
| | LS-233 | J-89 | J-1655 | J-1908 | J-7051 | HL27 | |
| Comparative I | 89.2 | 10.2 | 0 | 0 | 0 | 0.6 | 47 |
| Comparative J | 88.6 | 0 | 10.8 | 0 | 0 | 0.6 | 67 |
| Comparative K | 89.0 | 0 | 0 | 10.5 | 0 | 0.6 | 44 |
| Example 7 | 89.2 | 0 | 0 | 0 | 10.4 | 0.6 | 67 |

### Comparatives L-M and Example 8

Stearate/styrene acrylic supersize compositions listed in Table 4 were prepared, coated onto clear polyester film according to the procedure generally described above, and evaluated for % transmittance.

A grade P320 coated abrasive obtained under the trade designation "3M 216U P320 GOLD" obtained from 3M Company, St. Paul, Minnesota, was manufactured without the stearate supersize, and converted into 12 by 25 inch (30.48 by 63.50 cm) sheets. It is to be understood that, to one of ordinary skill in the art, the stearate supersize on a commercially available coated abrasive sheet could be removed merely by gently brushing off said supersize using a dilute aqueous soap solution. Comparatives L-M and Example 8 were applied to the coated abrasive sheets by means of a laboratory coater and dried at 70°C for 30 seconds. A pressure sensitive adhesive was then laminated to the backside of the coated abrasive sheet, the sheet converted into 6 inch (15.24 cm) diameter discs, and evaluated for cut performance as follows. The abrasive disc was mounted on a 6 inch (15.24 cm) diameter "STIKIT" backup pad, part no. 05576, obtained from 3M Company. This assembly was then attached to the dual action axis of a servo controlled motor, disposed over an X-Y table, with a cellulose acetate butyrate test panel secured to the table. The servo controlled motor was run at 7200 rpm, and the abrasive article urged at an angle of 2.5 degrees against the test panel at a load of 13 lbs (5.90 Kg). The tool was then set to traverse at a rate of 20 in/s (50.80 cm/s) along the width of the panel and traverse along the length of the panel at a rate of 5 in/s (12.70 cm/s). Seven such passes along the length of the panel were completed in each cycle, over a one minute interval, for a total of 5 cycles. The mass of the panel was measured before and after each cycle to determine the total mass lost in grams for each cycle, as well as a cumulative mass loss at the end of 5 cycles. Three abrasive discs were tested per each sample. Results are listed in Table 4.

**TABLE 4**

| Sample | Composition (grams) | | | | | | | Transmittance (%) | Total Cut (grams) |
|---|---|---|---|---|---|---|---|---|---|
| | LS-233 | J-89 | J-1655 | J-7051 | MMC | DPnP | HL27 | | |
| Comparative L | 88.5 | 8.9 | 0 | 0 | 0 | 1.86 | 0.6 | 52 | 17.0 |
| Comparative M | 91.0 | 0 | 6.8 | 0 | 1.5 | 0 | 0.7 | 46 | 16.8 |
| Example 8 | 93.0 | 0 | 0 | 6.3 | 0 | 0 | 0.7 | 56 | 16.9 |

### Comparative N and Examples 9-10

Stearate/styrene acrylic supersize compositions listed in Table 5 were prepared and then coated onto clear polyester film, and grade P320 coated abrasive sheets, according to the procedures generally described above. Table 5 lists the % transmittance and total cut after 5, one-minute, cycles, from an average of 4 discs per sample.

**TABLE 5**

| Sample | Composition (grams) | | | | | | Transmittance (%) | Total Cut (grams) |
|---|---|---|---|---|---|---|---|---|
| | LS-233 | J-89 | J-7051 | DPnP | HL27 | Ctg. Wt. (g/m²) | | |
| Comparative N | 88.8 | 8.75 | 0 | 1.8 | 0.6 | 12.55 | 66 | 12.5 |
| Example 9 | 90.7 | 0 | 8.66 | 0 | 0.6 | 10.88 | 61 | 13.3 |
| Example 10 | 90.7 | 0 | 8.66 | 0 | 0.6 | 17.60 | 63 | 14.1 |

### Comparative O

A urea-urea-formaldehyde coated abrasive having a grade P180 alumina mineral, obtained under the trade designation "3M GOLD ABRASIVE STIKIT, 236U P180" from 3M Company.

### Example 11

A coated abrasive as described in Comparative O, wherein 5% by weight of the P180 alumina mineral was substituted with an equal weight of a P180+ equilateral triangular shaped alumina abrasive grain having a length of 0.198 mm, a thickness of 0.047 mm and a sidewall angle of 8 degrees, was manufactured without the stearate supersize. It is to be understood that, to one of ordinary skill in the art, the stearate supersize on a commercially available coated abrasive sheet could be removed merely by gently brushing off said supersize using a dilute aqueous soap solution. The coated abrasive was converted into 12 by 25 inch (30.48 by 63.50 cm) sheets and the supersize composition Example 9 then applied by means of a laboratory coater and dried at 70°C for 30 seconds. The cut performance of both the Comparative and Example were determined and the results are listed in Table 6.

**TABLE 6**

| Sample | Total Cut (grams) |
|---|---|
| Comparative O | 16.0 |
| Example 11 | 24.4 |

## Claims

1. An abrasive article (100) comprising a plurality of layers, in the following order:
a backing (110);
an abrasive layer (112); and
a supersize coat (122) comprising calcium stearate, and **characterised in that** the supersize coat (122) comprises an ammonium salt of a modified styrene acrylic polymer.

2. The abrasive article of claim 1, wherein the supersize coat is essentially free of surfactant.

3. The abrasive article of claim 1 or 2, wherein the ammonium salt of a modified styrene acrylic polymer has a minimum film-forming temperature in the range of from 0 to 60 degrees Celsius.

4. The abrasive article of any one of claims 1-3, wherein the supersize coat further comprises clay particles present in an amount of from 0.2 percent to 5 percent by weight based on the overall weight of the supersize coat.

5. The abrasive article of claim 4, wherein the clay particles comprise a layered silicate.

6. The abrasive article of claim 5, wherein the layered silicate comprises a montmorillonite.

7. The abrasive article of claim 6, wherein the montmorillonite comprises a sodium montmorillonite, calcium montmorillonite, or combination thereof.

8. The abrasive article of any one of claims 4-7, wherein the clay particles have a median particle size of from 0.1 micrometers to 1 micrometer.

9. The abrasive article of any one of claims 1-8, wherein the calcium stearate is present in an amount of from 80 percent to 97 percent by weight based on the overall weight of the supersize coat.

10. The abrasive article of any one of claims 1-9, wherein the ammonium salt of a modified styrene acrylic polymer is present in an amount of from 0.1 percent to 20 percent by weight based on the overall weight of the supersize coat.

11. The abrasive article of claim 10, wherein the ammonium salt of a modified styrene acrylic polymer is present in an amount of from 1 percent to 12 percent by weight based on the overall weight of the supersize coat.

12. The abrasive article of claim 11, wherein the ammonium salt of a styrene acrylic polymer is present in an amount of from 1 percent to 8 percent by weight based on the normalized weight of the supersize coat.

13. The abrasive article of any one of claims 1-12, wherein the supersize coat displays a transmittance of at least 80 percent according to the Transmittance Test.

14. A method of making an abrasive article (100) comprising:
dispersing in water the following components to provide a dispersion:
calcium stearate;
an ammonium salt of a modified styrene acrylic polymer;
coating the dispersion onto an abrasive layer (112); and
removing the water from the dispersion to provide the abrasive article.

## Patentansprüche

1. Ein Schleifartikel (100), der eine Mehrzahl von Schichten in der folgenden Reihenfolge aufweist:
einen Träger (110);
eine Schleifschicht (112); und
eine obere Deckschicht (122), die Calciumstearat umfasst und **dadurch gekennzeichnet ist, dass** die obere Deckschicht (122) ein Ammoniumsalz eines modifizierten Styrolacrylpolymers umfasst.

2. Der Schleifartikel nach Anspruch 1, wobei die obere Deckschicht im Wesentlichen frei von Tensid ist.

3. Der Schleifartikel nach Anspruch 1 oder 2, wobei das Ammoniumsalz eines modifizierten Styrolacrylpolymers eine minimale Filmbildungstemperatur im Bereich von 0 bis 60 Grad Celsius aufweist.

4. Der Schleifartikel nach einem der Ansprüche 1 bis 3, wobei die obere Deckschicht ferner Tonteilchen umfasst, die in einer Menge von 0,2 Gewichtsprozent bis 5 Gewichtsprozent, bezogen auf das Gesamtgewicht der oberen Deckschicht, vorliegen.

5. Der Schleifartikel nach Anspruch 4, wobei die Tonteilchen ein Schichtsilikat umfassen.

6. Der Schleifartikel nach Anspruch 5, wobei das Schichtsilikat einen Montmorillonit umfasst.

7. Der Schleifartikel nach Anspruch 6, wobei der Montmorillonit einen Natriummontmorillonit, Calciummontmorillonit oder eine Kombination davon umfasst.

8. Der Schleifartikel nach einem der Ansprüche 4 bis 7, wobei die Tonteilchen eine mittlere Teilchengröße von 0,1 Mikrometer bis 1 Mikrometer aufweisen.

9. Der Schleifartikel nach einem der Ansprüche 1 bis 8, wobei das Calciumstearat in einer Menge von 80 Gewichtsprozent bis 97 Gewichtsprozent, bezogen auf das Gesamtgewicht der oberen Deckschicht, vorliegt.

10. Der Schleifartikel nach einem der Ansprüche 1 bis 9, wobei das Ammoniumsalz eines modifizierten Styrolacrylpolymers in einer Menge von 0,1 Gewichtsprozent bis 20 Gewichtsprozent, bezogen auf das Gesamtgewicht der oberen Deckschicht, vorliegt.

11. Der Schleifartikel nach Anspruch 10, wobei das Ammoniumsalz eines modifizierten Styrolacrylpolymers in einer Menge von 1 Gewichtsprozent bis 12 Gewichtsprozent, bezogen auf das Gesamtgewicht der oberen Deckschicht, vorliegt.

12. Der Schleifartikel nach Anspruch 11, wobei das Ammoniumsalz eines Styrolacrylpolymers in einer Menge von 1 Gewichtsprozent bis 8 Gewichtsprozent, bezogen auf das normalisierte Gewicht der oberen Deckschicht, vorliegt.

13. Der Schleifartikel nach einem der Ansprüche 1 bis 12, wobei die obere Deckschicht eine Durchlässigkeit von mindestens 80 Prozent gemäß dem Durchlässigkeitstest zeigt.

14. Ein Verfahren zum Herstellen eines Schleifartikels (100), umfassend:
Dispergieren der folgenden Bestandteile in Wasser, um eine Dispersion bereitzustellen:
Calciumstearat;
ein Ammoniumsalz eines modifizierten Styrolacrylpolymers;
Auftragen der Dispersion auf eine Schleifschicht (112); und
Entfernen des Wassers aus der Dispersion, um den Schleifartikel bereitzustellen.

## Revendications

1. Article abrasif (100) comprenant une pluralité de couches, dans l'ordre suivant :
un support (110) ;
une couche abrasive (112) ; et
un revêtement de super-apprêt (122) comprenant du stéarate de calcium, et **caractérisé en ce que** le revêtement de super-apprêt (122) comprend un sel d'ammonium d'un polymère styrène-acrylique modifié.

2. Article abrasif selon la revendication 1, dans lequel le revêtement de super-apprêt est pratiquement exempt d'agent tensioactif.

3. Article abrasif selon la revendication 1 ou 2, dans lequel le sel d'ammonium d'un polymère styrène-acrylique modifié a une température minimale de formation de film dans la plage allant de 0 à 60 degrés Celsius.

4. Article abrasif selon l'une quelconque des revendications 1 à 3, dans lequel le revêtement de super-apprêt comprend en outre des particules d'argile présentes en une quantité allant de 0,2 pour cent à 5 pour cent en poids sur la base du poids global du revêtement de super-apprêt.

5. Article abrasif selon la revendication 4, dans lequel les particules d'argile comprennent un silicate en couches.

6. Article abrasif selon la revendication 5, dans lequel le phyllosilicate comprend une montmorillonite.

7. Article abrasif selon la revendication 6, dans lequel la montmorillonite comprend une montmorillonite de sodium, une montmorillonite de calcium, ou leurs combinaisons.

8. Article abrasif selon l'une quelconque des revendications 4 à 7, dans lequel les particules d'argile ont une taille médiane de particules allant de 0,1 micromètre à 1 micromètre.

9. Article abrasif selon l'une quelconque des revendications 1 à 8, dans lequel le stéarate de calcium est présent en une quantité allant de 80 pour cent à 97 pour cent en poids sur la base du poids global du revêtement de super-apprêt.

10. Article abrasif selon l'une quelconque des revendications 1 à 9, dans lequel le sel d'ammonium d'un polymère styrène-acrylique modifié est présent en une quantité allant de 0,1 pour cent à 20 pour cent en poids sur la base du poids global du revêtement de super-apprêt.

11. Article abrasif selon la revendication 10, dans lequel le sel d'ammonium d'un polymère styrène-acrylique modifié est présent en une quantité allant de 1 pour cent à 12 pour cent en poids sur la base du poids global du revêtement de super-apprêt.

12. Article abrasif selon la revendication 11, dans lequel le sel d'ammonium d'un polymère styrène-acrylique est présent en une quantité allant de 1 pour cent à 8 pour cent en poids sur la base du poids normalisé du revêtement de super-apprêt.

13. Article abrasif selon l'une quelconque des revendications 1 à 12, dans lequel le revêtement de super-apprêt présente une transmittance d'au moins 80 pour cent selon le test de transmittance.

14. Procédé de fabrication d'un article abrasif (100) comprenant :
la dispersion dans de l'eau des composants suivants pour fournir une dispersion :
du stéarate de calcium ;
un sel d'ammonium d'un polymère styrène-acrylique modifié ;
le revêtement de la dispersion sur une couche abrasive (112) ; et
l'élimination de l'eau de la dispersion pour fournir l'article abrasif.
